# EUROPEAN PATENT APPLICATION

(11) **EP 4 207 445 A1**
(43) Date of publication of application: **05.07.2023**
(21) Application number: 22778288.5
(22) Date of filing: 10.01.2022
(51) Int. Cl.: H01M 50/126

(54) **CELL, BATTERY AND ELETRIC DEVICE**

(30) Priority: 29.03.2021 CN 202110335422
(71) Applicant: Ningde Amperex Technology Limited, Zhangwan Town, Jiaocheng District Ningde City Fujian 352100 (CN)
(72) Inventor: ZHAO, Yangyu, Ningde City, Fujian Province 352100 (CN); GONG, Zuzhen, Ningde City, Fujian Province 352100 (CN); JIN, Xin, Ningde City, Fujian Province 352100 (CN)
(74) Representative: Icosa
(86) International application number: PCT/CN2022/071122
(87) International publication number: WO 2022/206099

(57) **Abstract**

A battery cell is provided and includes an electrode assembly, where an outer surface of the electrode assembly includes a first surface, a first side surface, a second surface, and a second side surface that are sequentially connected, the outer surface of the electrode assembly further includes a first end surface and a second end surface opposite the first end surface, the first end surface and the second end surface are respectively connected to the first surface and the second surface. The battery cell further includes: a first adhesive film adhered to the first side surface and extending from the first side surface to the first surface and/or the second surface; and a first adhesive layer adhered to the first surface and extending from the first surface to the second surface through the first end surface, where in a width direction of the electrode assembly, there is a first overlapping portion between the first adhesive film and the first adhesive layer on the first surface and/or the second surface, and in the first overlapping portion, the first adhesive film is disposed between the first surface and/or the second surface and the first adhesive layer. This application further provides a battery including the battery cell and an electric device. The battery cell can effectively improve drop performance.

## Description

### TECHNICAL FIELD

This application relates to the field of battery technologies, and in particular, to a battery cell, a battery, and an electric device.

### BACKGROUND

A battery cell typically includes an electrode assembly and a packaging film. There is a specific gap between the electrode assembly and an inner wall of the packaging film. Therefore, when the battery cell drops for various reasons, the electrode assembly may pierce a seal of the packaging film, causing electrolyte leakage; and sometimes there will be displacement between electrode plates of the electrode assembly, resulting in a short circuit in the battery cell, thereby causing heating, fire, or explosion.

To improve drop performance, double-sided adhesive tape, hot melt adhesive, or the like is usually used to strengthen fixing of the electrode assembly and the packaging film. Such a method can reduce movement and collision of the electrode assembly, and the double-sided adhesive tape or hot melt adhesive can play a cushioning role when the battery cell is dropped. In a process of implementing this application, the inventor has found that there are at least the following problems in the prior art: This method often causes a tear in a current collector (for example, aluminum foil) at an adhesive portion when the battery cell is dropped, and fins formed by tearing may pierce a separator in the electrode assembly, causing an internal short circuit in the electrode assembly.

### SUMMARY

In view of this, it is necessary to provide a battery cell with improved drop performance, a battery using the battery cell, and an electric device.

An embodiment of this application provides a battery cell, including: an electrode assembly, where an outer surface of the electrode assembly induces a first surface, a first side surface, a second surface, and a second side surface that are sequentially connected, the first surface is disposed opposite to the second surface, the first side surface is disposed opposite to the second side surface, the outer surface of the electrode assembly further includes a first end surface and a second end surface opposite the first end surface, and the first end surface and the second end surface are respectively connected to the first surface and the second surface. The battery cell further includes a first adhesive film and a first adhesive layer, where the first adhesive film is adhered to the first side surface and extends from the first side surface to the first surface and/or the second surface; and the first adhesive layer is adhered to the first surface and extends from the first surface to the second surface through the first end surface, in a width direction of the electrode assembly, there is a first overlapping portion between the first adhesive film and the first adhesive layer on the first surface and/or the second surface, and in the first overlapping portion, the first adhesive film is disposed between the first surface and/or the second surface and the first adhesive layer.

In a possible implementation, in the width direction of the electrode assembly, a width of the first overlapping portion is greater than or equal to 1 mm and less than or equal to 15 mm.

In a possible implementation, an adhesive force between the first adhesive film and the first surface and/or the second surface is greater than or equal to 0.05 N/mm, and an adhesive force between the first adhesive film and the first adhesive layer is greater than or equal to 0.15 N/mm.

In a possible implementation, a product of an area of the first overlapping portion and an adhesive force between the first adhesive film and the first adhesive layer is defined as a first adhesive force, a product of an area of an overlapping portion between the first adhesive film and an outer surface of the electrode assembly and an adhesive force therebetween is defined as a second adhesive force, and the first adhesive force is smaller than the second adhesive force.

In a possible implementation, the battery cell further includes: a second adhesive film, where the second adhesive film is adhered to the second side surface and extends from the second side surface to the first surface and/or the second surface; and a second adhesive layer, where the second adhesive layer is adhered to the first surface and extends from the first surface to the second surface through the first end surface, in a width direction of the electrode assembly, there is a second overlapping portion between the second adhesive film and the second adhesive layer on the first surface and/or the second surface, and in the second overlapping portion, the second adhesive film is disposed between the first surface and/or the second surface and the second adhesive layer.

In a possible implementation, the battery cell further includes a third adhesive layer adhered to the first surface or the second surface; in the width direction of the electrode assembly, there is a third overlapping portion between the first adhesive film and/or the second adhesive film and the third adhesive layer; and in the third overlapping portion, the third adhesive layer is disposed between the first adhesive film and/or the second adhesive film and the first surface, or the third adhesive layer is disposed between the first adhesive film and/or the second adhesive film and the second surface.

In a possible implementation, in the width direction of the electrode assembly, a width of the third overlapping portion is greater than or equal to 1 mm and less than or equal to 15 mm.

In a possible implementation, an adhesive force between the first adhesive film and/or the second adhesive film and the third adhesive layer is greater than or equal to 0.15 N/mm, and an adhesive force between the third adhesive layer and the first surface or the second surface is greater than or equal to 0.15 N/mm.

In a possible implementation, a product of an area of an overlapping portion between the first adhesive film and an outer surface of the electrode assembly and an adhesive force therebetween is defined as a second adhesive force, a product of an area of the third overlapping portion and an adhesive force between the first adhesive film and the third adhesive layer is defined as a third adhesive force, and the third adhesive force is smaller than the second adhesive force.

In a possible implementation, the battery cell further includes a first tab and a second tab that are electrically connected to the electrode assembly respectively, where the first tab and the second tab are spaced apart and protrude from the second end surface, the first adhesive film extends to the second surface and is close to the first tab, and the second adhesive film extends to the second surface and is close to the second tab; and in the width direction of the electrode assembly, on the second surface, the first adhesive film partially overlaps the first tab, and/or on the second surface, the second adhesive film partially overlaps the second tab, with an overlapping width greater than or equal to 1 mm and less than or equal to 20 mm.

In a possible implementation, the first adhesive film and/or the second adhesive film extends on the second surface to a position between the first tab and the second tab.

In a possible implementation, in the width direction of the electrode assembly, on the first surface, the first adhesive film and/or the second adhesive film does not overlap the first tab.

In a possible implementation, the battery cell includes a packaging film, where the packaging film includes a first recess and a second recess that are configured for accommodating the electrode assembly, the first recess has a depth greater than the second recess, the first surface faces a bottom surface of the first recess, and the second surface faces a bottom surface of the second recess.

Another embodiment of this application further provides a battery, including a housing, where the battery further includes any one of the foregoing battery cells, and the battery cell is disposed in the housing.

Another embodiment of this application further provides an electric device, including any one of the foregoing batteries.

In the battery cell, battery, and electric device provided in the embodiments of this application, the battery cell is provided with the first overlapping portion, so that part of a force acting on the first adhesive layer is transferred to the first adhesive film when the battery cell is dropped, slowing down the impact of an electrode plate in the electrode assembly on the first adhesive layer to prevent a short circuit of the battery cell that is caused by a tear in the electrode assembly at an adhesive portion, thereby effectively improving the drop performance of the battery cell. Moreover, the tear resistance of the first adhesive film is better than that of the electrode plate in the electrode assembly, which further reduces the risk of tearing of the electrode plate in the electrode assembly, thereby improving the safety performance of the battery cell.

### BRIEF DESCRIPTION OF DRAWINGS

FIG. 1 is a schematic front-view structural diagram of a battery cell according to an embodiment of this application.
FIG. 2 is a schematic rear-view structural diagram of a battery cell according to an embodiment of this application.
FIG. 3 is a schematic side-view structural diagram of a battery cell according to an embodiment of this application.
FIG. 4 is a schematic side-view structural diagram of a battery cell according to an embodiment of this application.
FIG. 5 is a schematic front-view structural diagram of a battery cell according to an embodiment of this application.
FIG. 6 is a schematic side-view structural diagram of a battery cell according to an embodiment of this application.
FIG. 7 is a schematic rear-view structural diagram of a battery cell according to an embodiment of this application.
FIG. 8 is a schematic rear-view structural diagram of a battery cell according to an embodiment of this application.
FIG. 9 is a schematic rear-view structural diagram of a battery cell according to an embodiment of this application.
FIG. 10 is a schematic structural diagram of a packaging film according to an embodiment of this application.
FIG. 11 is a schematic cross-sectional structural diagram of a battery cell according to an embodiment of this application.

### Reference signs of main components:

| | |
|---|---|
| Battery cell | 100 |
| Electrode assembly | 10 |
| First surface | 11 |
| Second surface | 12 |
| First side surface | 13 |
| Second side surface | 14 |
| First end surface | 15 |
| Second end surface | 16 |
| First tab | 17 |
| Second tab | 18 |
| First adhesive film | 20 |
| Second adhesive film | 21 |
| First adhesive layer | 30 |
| First overlapping portion | 30a |
| Second adhesive layer | 31 |
| Second overlapping portion | 31a |
| Third adhesive layer | 40 |
| Third overlapping portion | 40a |
| Fourth overlapping portion | 40b |
| Packaging film | 50 |

| | |
|---|---|
| First recess | 51 |
| Second recess | 52 |

### DESCRIPTION OF EMBODIMENTS

The following describes the technical solutions in the embodiments of this application with reference to the accompanying drawings in the embodiments of this application. Apparently, the described embodiments are only some rather than all of the embodiments of this application.

It should be noted that, when one component is deemed as being "connected to" another component, it can be directly connected to the another component, or there can be a component in between. When one component is deemed as being "disposed on" another component, it can be directly disposed on the another component, or there can be a component in between. The terms "top", "bottom", "upper", "lower", "left", "right", "front", "rear", and other similar expressions as used herein are for illustration only.

Unless otherwise defined, all technical and scientific terms used herein shall have the same meanings as commonly understood by those skilled in the art to which this application belongs. The terms used herein in the specification of this application are only used to describe specific embodiments, and are not intended to limit this application.

The embodiments of this application provide a battery cell, including an electrode assembly, where an outer surface of the electrode assembly induces a first surface, a first side surface, a second surface, and a second side surface that are sequentially connected, the first surface is disposed opposite to the second surface, the first side surface is disposed opposite to the second side surface, the outer surface of the electrode assembly further includes a first end surface and a second end surface opposite the first end surface, and the first end surface and the second end surface are respectively connected to the first surface and the second surface. The battery cell further includes a first adhesive film and a first adhesive layer, where the first adhesive film is adhered to the first side surface and extends from the first side surface to the first surface and/or the second surface; and the first adhesive layer is adhered to the first surface and extends from the first surface to the second surface through the first end surface, in a width direction of the electrode assembly, there is a first overlapping portion between the first adhesive film and the first adhesive layer on the first surface and/or the second surface, and in the first overlapping portion, the first adhesive film is disposed between the first surface and/or the second surface and the first adhesive layer.

In the battery cell provided in the embodiments of this application, the first overlapping portion is provided, so that part of a force acting on the first adhesive layer is transferred to the first adhesive film when the battery cell is dropped, slowing down the impact of an electrode plate in the electrode assembly on the first adhesive layer to prevent a short circuit of the battery cell that is caused by a tear in the electrode assembly at an adhesive portion, thereby effectively improving the drop performance of the battery cell. Moreover, the tear resistance of the first adhesive film is better than that of the electrode plate in the electrode assembly, which further reduces the risk of tearing of the electrode plate in the electrode assembly, thereby improving the safety performance of the battery cell.

The following describes in detail some embodiments with reference to the accompanying drawings. In absence of conflicts, the following embodiments and features in the embodiments may be combined.

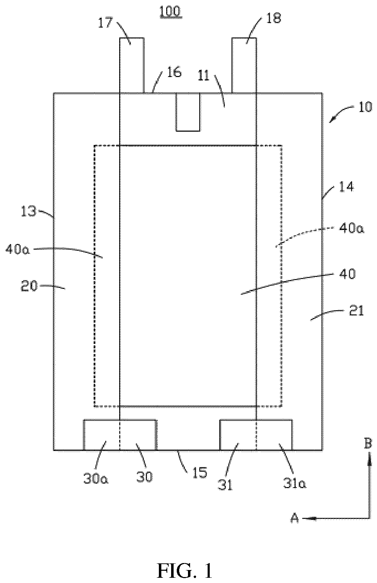

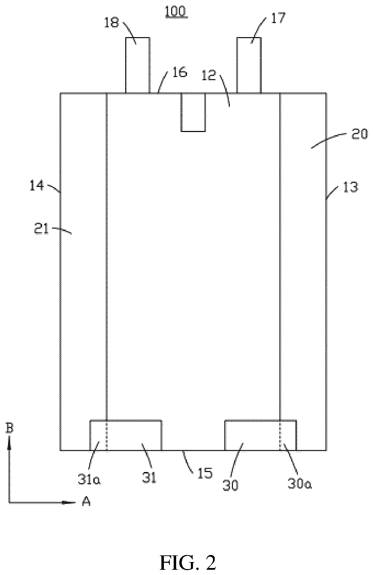

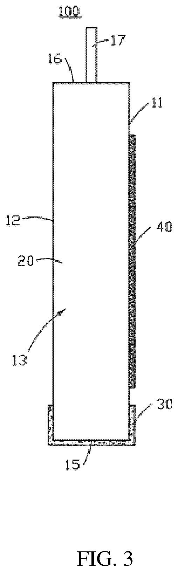

Referring to FIG. 1, FIG. 2, and FIG. 3 together, a battery cell 100 of this embodiment includes an electrode assembly 10, a first adhesive film 20, and a first adhesive layer 30.

An outer surface of the electrode assembly 10 includes a first surface 11, a first side surface 13, a second surface 12, and a second side surface 14 that are sequentially connected. The first surface 11 is disposed opposite to the second surface 12, and the first side surface 13 is disposed opposite to the second side surface 14. The outer surface of the electrode assembly 10 further includes a first end surface 15 and a second end surface 16 opposite the first end surface 15. The first end surface 15 and the second end surface 16 are respectively connected to the first surface 11 and the second surface 12.

The first adhesive film 20 is adhered to the first side surface 13 and extends from the first side surface 13 to the first surface 11 and/or the second surface 12. A surface of the first adhesive film 20 facing away from the electrode assembly 10 is not adhesive. For example, the first adhesive film 20 may be a single-sided adhesive film, the single-sided adhesive film includes an insulating layer and an adhesive layer that are laminated, where the insulating layer is used for insulating a surface of the electrode assembly 10, and the adhesive layer is used for adhering to the electrode assembly 10. It can be understood that the first adhesive film 20 may be, but is not limited to, a green adhesive film or a high-viscosity green adhesive film.

The first adhesive layer 30 is adhered to the first surface 11 and extends from the first surface 11 to the second surface 12 through the first end surface 15, so as to protect the electrode assembly 10 at the adhesive portion. In a width direction A of the electrode assembly 10, there is a first overlapping portion 30a between the first adhesive film 20 and the first adhesive layer 30 on the first surface 11 and/or the second surface 12, and in the first overlapping portion 30a, the first adhesive film 20 is disposed between the first surface 11 and/or the second surface 12 and the first adhesive layer 30. The first overlapping portion 30a is provided, so that part of a force acting on the first adhesive layer 30 is transferred to the first adhesive film 20 when the battery cell 100 is dropped, slowing down the impact of an electrode plate in the electrode assembly 10 on the first adhesive layer 30 to prevent a short circuit of the battery cell 100 that is caused by a tear in the electrode assembly 10 at an adhesive portion, thereby effectively improving the drop performance of the battery cell 100. Moreover, the tear resistance of the first adhesive film 20 is better than that of the electrode plate in the electrode assembly 10, which further reduces the risk of tearing of the electrode plate in the electrode assembly 10, thereby improving the safety performance of the battery cell 100.

A product of an area of the first overlapping portion 30a and an adhesive force between the first adhesive film 20 and the first adhesive layer 30 is defined as a first adhesive force, and a product of an area of an overlapping portion between the first adhesive film 20 and an outer surface of the electrode assembly 10 and an adhesive force therebetween is defined as a second adhesive force. The first adhesive force is smaller than the second adhesive force, to prevent the first adhesive film 20 from being broken due to an excessive force and causing a tear in the electrode assembly 10 at the adhesive portion.

In some embodiments, in the width direction A of the electrode assembly 10, a width of the first overlapping portion 30a is greater than or equal to 1 mm and less than or equal to 15 mm. An adhesive force between the first adhesive film 20 and the first surface 11 and/or the second surface 12 is greater than or equal to 0.05 N/mm. An adhesive force between the first adhesive film 20 and the first adhesive layer 30 is greater than or equal to 0.15 N/mm. It can be understood that the width of the first overlapping portion 30a, the adhesive force between the first adhesive film 20 and the first surface 11 and/or the second surface 12, and the adhesive force between the first adhesive film 20 and the first adhesive layer 30 can be adjusted based on a size of the electrode assembly 10, so that the first adhesive force is smaller than the second adhesive force.

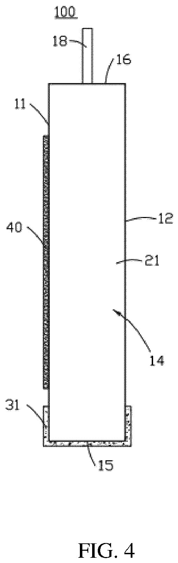

Still referring to FIG. 1, FIG. 2, and FIG. 4, in some embodiments, the battery cell 100 further includes a second adhesive film 21 and a second adhesive layer 31. The second adhesive film 21 is adhered to the second side surface 14 and extends from the second side surface 14 to the first surface 11 and/or the second surface 12. The second adhesive layer 31 is adhered to the first surface 11 and extends from the first surface 11 and the first end surface to the second surface 12. In the width direction A of the electrode assembly 10, there is a second overlapping portion 31a between the second adhesive film 21 and the second adhesive layer 31 on the first surface 11 and/or the second surface 12, and in the second overlapping portion, the second adhesive film 21 is disposed between the first surface 11 and/or the second surface 12 and the second adhesive layer 31.

The second overlapping portion 31a is provided, so that part of a force acting on the second adhesive layer 31 is transferred to the second adhesive film 21 when the battery cell 100 is dropped, slowing down the impact of an electrode plate in the electrode assembly 10 on the second adhesive layer 31 to prevent a short circuit of the battery cell 100 that is caused by a tear in the electrode assembly 10 at an adhesive portion, thereby effectively improving the drop performance of the battery cell 100. Moreover, the tear resistance of the second adhesive film 21 is better than that of the electrode plate in the electrode assembly 10, which further reduces the risk of tearing of the electrode plate in the electrode assembly 10, thereby improving the safety performance of the battery cell 100.

In some embodiments, the second adhesive layer 31 and the first adhesive layer 30 are symmetrically disposed, so that the second adhesive layer 31 and the first adhesive layer 30 are uniformly stressed when the electrode plate in the electrode assembly 10 is impacted. The second adhesive film 21 and the first adhesive film 20 are symmetrically disposed, so that a pulling force exerted by the first overlapping portion 30a on the corresponding first adhesive film 20 and a pulling force exerted by the second overlapping portion 31a on the corresponding second adhesive film 21 are approximately equal, thereby preventing a tear in the electrode assembly 10 on one side of the adhesive portion that is caused by uneven stresses on the first adhesive film 20 and the second adhesive film 21.

In the foregoing battery cell 100, in the width direction A of the electrode assembly 10, widths of the first adhesive film 20 and the second adhesive film 21 are greater than or equal to 5 mm and less than or equal to 100 mm; and in a length direction B of the electrode assembly 10, the first adhesive film 20 and the second adhesive film 21 are greater than or equal to 5 mm and less than or equal to 100 mm.

Still referring to FIG. 1, FIG. 3, and FIG. 4, in some embodiments, the battery cell 100 further includes a third adhesive layer 40, where the third adhesive layer 40 is adhered to the first surface 11 or the second surface 12. Surfaces of the third adhesive layer 40 facing and facing away from the electrode assembly 10 are both adhesive and used for adhering the electrode assembly 10 to an inner wall of an packaging film when the electrode assembly 10 is connected to the packaging film accommodating the electrode assembly 10, to prevent occurrence of electrolyte leakage caused by the electrode assembly 10 piercing a seal of the packaging film when the battery cell 100 is dropped, thereby effectively improving the drop performance of the battery cell 100. For example, the third adhesive layer 40 may be a double-sided adhesive tape. It can be understood that the double-sided adhesive tape may be, but is not limited to, a substance with double-sided adhesive, such as ordinary rubber, hot-melt adhesive or adhesive paper, and the double-sided adhesive tape may be, but is not limited to, a single polymer or a mixture of polymers

In the width direction A of the electrode assembly 10, there is a third overlapping portion 40a between the first adhesive film 20 and/or the second adhesive film 21 and the third adhesive layer 40, and in the third overlapping portion 40a, the third adhesive layer 40 is disposed between the first adhesive film 20 and/or the second adhesive film 21 and the first surface 11, or the third adhesive layer 40 is disposed between the first adhesive film 20 and/or the second adhesive film 21 and the second surface 12.

The third overlapping portion 40a is provided, so that part of a force acting on the third adhesive layer 40 of the packaging film is transferred to the first adhesive film 20 and/or the second adhesive film 21 when the battery cell 100 suffers from drop, thereby reducing a pulling force between the third adhesive layer 40 and the electrode assembly 10. Moreover, the tear resistance of the first adhesive film 20 and/or the second adhesive film 21 is better than that of the electrode plate in the electrode assembly 10, which reduces the risk of tearing of the electrode plate in the electrode assembly 10, thereby improving the safety performance of the battery cell. Furthermore, the third overlapping portion 40a is provided, to avoid a gap between the third adhesive layer 40 and the first adhesive film 20 and/or the second adhesive film 21, thereby preventing a tear in the electrode assembly 10 at the gap that is caused by stress concentration in the gap portion when the battery cell 100 is dropped.

When there is a third overlapping portion 40a between the first adhesive film 20 and the second adhesive film 21 and the third adhesive layer 40, the third overlapping portion 40a includes a first portion and a second portion located on two sides of the third adhesive layer 40. The first portion and the second portion are symmetrically disposed, so that pulling forces exerted by the third adhesive layer 40 on the corresponding first adhesive film 20 and the corresponding second adhesive film 21 are approximately equal, thereby avoiding a tear in the electrode assembly 10 on one side of the adhesive portion that is caused by uneven stress of the first adhesive film 20 and the second adhesive film 21.

In some embodiments, a product of an area of an overlapping portion between the first adhesive film 20 and an outer surface of the electrode assembly 10 and an adhesive force therebetween is defined as a second adhesive force, and a product of an area of the third overlapping portion 40a and an adhesive force between the first adhesive film 20 and the third adhesive layer 40 is defined as a third adhesive force. The third adhesive force is smaller than the second adhesive force, to prevent the first adhesive film 20 from being broken due to an excessive force and causing a tear in the electrode assembly 10 at the adhesive portion. Similarly, the third adhesive force is also smaller than a product of an area of an overlapping portion between the second adhesive film 21 and an outer surface of the electrode assembly 10 and an adhesive force therebetween.

In some embodiments, in the width direction A of the electrode assembly 10, a width of the third overlapping portion 40a is greater than or equal to 1 mm and less than or equal to 15 mm. An adhesive force between the first adhesive film 20 and/or the second adhesive film 21 and the third adhesive layer 40 is greater than or equal to 0.15 N/mm, and an adhesive force between the third adhesive layer 40 and the first surface or the second surface 12 is greater than or equal to 0.15 N/mm. It can be understood that the width of the third overlapping portion 40a, the adhesive force between the first adhesive film 20 and the first surface 11 and/or the second surface 12, and the adhesive force between the first adhesive film 20 and the first adhesive layer 30 can be adjusted based on a size of the electrode assembly 10, so that the third adhesive force is smaller than the second adhesive force.

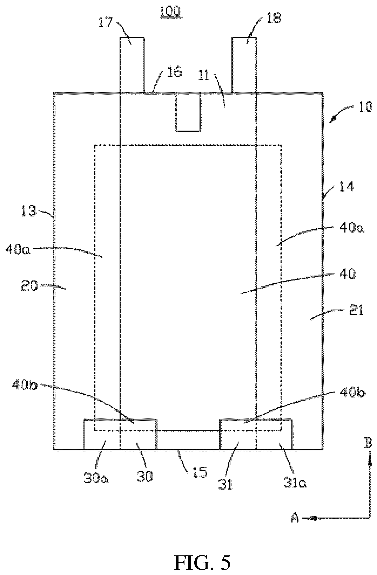

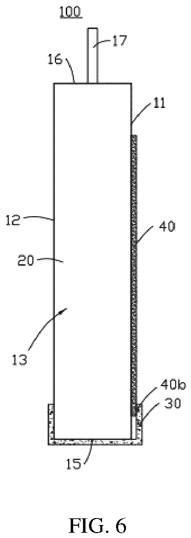

Referring to FIG. 5 and FIG. 6, in some embodiments, in the length direction B of the electrode assembly 10, there is a fourth overlapping portion 40b between the first adhesive layer 30 and/or the second adhesive layer 31 and the third adhesive layer 40, and in the fourth overlapping portion 40b, the third adhesive layer 40 is disposed between the first adhesive layer 30 and/or the second adhesive layer 31 and the first surface 11, or the third adhesive layer 40 is disposed between the first adhesive layer 30 and/or the second adhesive layer 31 and the second surface 12.

The fourth overlapping portion 40b is provided, so that the first adhesive film 20, the second adhesive film 21, the first adhesive layer 30, the second adhesive layer 31, and the third adhesive layer 40 are interconnected to form an integral protective structure. The third adhesive layer 40 is provided, so that the electrode assembly 10 is adhered to the inner wall of the packaging film to form an integral structure, to prevent occurrence of electrolyte leakage caused by the electrode assembly 10 piercing a seal of the packaging film when the battery cell 100 is dropped, and to prevent the electrode plate in the electrode assembly 10 from being torn, thereby effectively improving the drop performance of the battery cell 100.

In some embodiments, in the length direction B of the electrode assembly 10, a length of the fourth overlapping portion 40b is greater than or equal to 1 mm and less than or equal to 15 mm.

In the foregoing battery cell 100, in the width direction A of the electrode assembly 10, a width of the third adhesive layer 40 is greater than or equal to 5 mm and less than or equal to 100 mm; in a length direction B of the electrode assembly 10, a length of the third adhesive layer 40 is greater than or equal to 5 mm and less than or equal to 100 mm; and in a thickness direction of the electrode assembly 10, a thickness of the third adhesive layer 40 is greater than or equal to 1 µm and less than or equal to 100 µm.

In some embodiments, the third adhesive layer 40 has an integral shape such as a rectangle, a square, or an irregular shape. It can be understood that the third adhesive layer 40 is in a split shape.

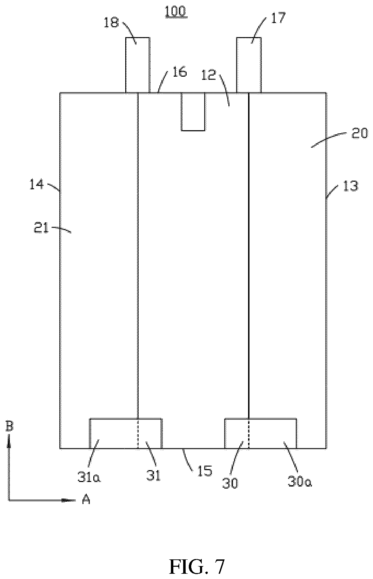

Referring to FIG. 7, the battery cell 100 further includes a first tab 17 and a second tab 18 that are electrically connected to the electrode assembly 10 respectively. The first tab 17 and the second tab 18 are spaced apart and protrude from the second end surface 16, and the first adhesive film 20 extends to the second surface 12 and is close to the first tab 17. The second adhesive film 21 extends to the second surface 12 and is close to the second tab 18. In the width direction A of the electrode assembly 10, the first adhesive film 20 partially overlaps the first tab 17 on the second surface 12, and/or the second adhesive film 21 partially overlaps the second tab 18 on the second surface 12, with an overlapping width greater than or equal to 1 mm and less than or equal to 20 mm. Because the first adhesive film 20 partially overlaps the first tab 17, and/or the second adhesive film 21 partially overlaps the second tab 18, the adhesive force between the first adhesive film 20 and/or the second adhesive film 21 and the outer surface of the electrode assembly 10 is effectively improved, and the risk of tearing of the electrode plate in the electrode assembly 10 is reduced.

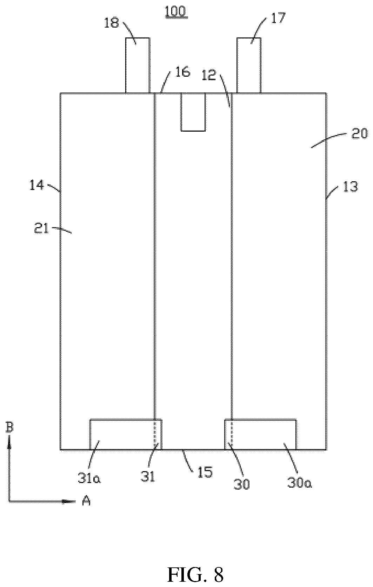

Referring to FIG. 8, in some embodiments, the first adhesive film 20 and/or the second adhesive film 21 extends on the second surface 12 to a position between the first tab 17 and the second tab 18, to further increase an area of an overlapping portion between the first adhesive film 20 and the first tab 17 and/or an area of an overlapping portion between the second adhesive film 21 and the second tab 18, thereby effectively enhancing the adhesive force between the first adhesive film 20 and/or the second adhesive film 21 and the outer surface of the electrode assembly 10, and reducing the risk of tearing of the electrode plate in the electrode assembly 10.

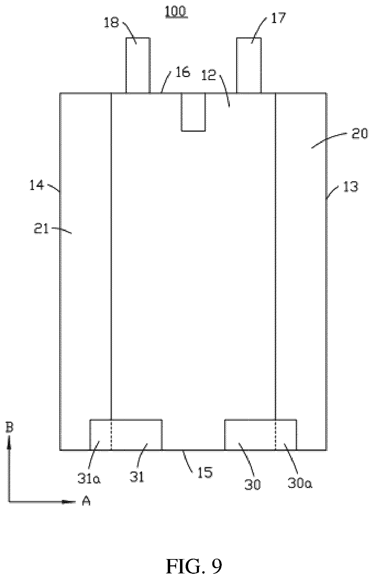

Referring to FIG. 9, in some embodiments, in the width direction A of the electrode assembly 10, on the first surface 11, the first adhesive film 20 does not overlap the first tab 17, and/or on the first surface 11, the second adhesive film 21 does not overlap the second tab 18, so as to reduce a thickness of the electrode assembly 10 corresponding to a region between the first tab 17 and the second tab 18, effectively improving the energy density of the battery cell 100.

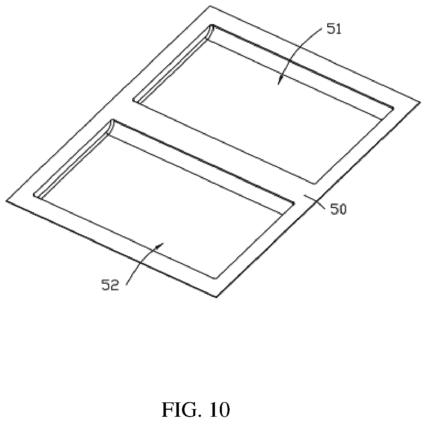

Referring to FIG. 10, the battery cell 100 includes a packaging film 50. The packaging film 50 includes a first recess 51 and a second recess 52 that are configured for accommodating the electrode assembly 10. The first recess 51 has a depth greater than that of the second recess 52. The first surface 11 faces a bottom surface of the first recess 51, and the second surface 12 faces a bottom surface of the second recess 52. The first surface 11 is a surface on which a terminating end of the electrode assembly 10 is located, and the third adhesive layer 40 is adhered to the first surface 11 and a bottom surface of the first recess 51.

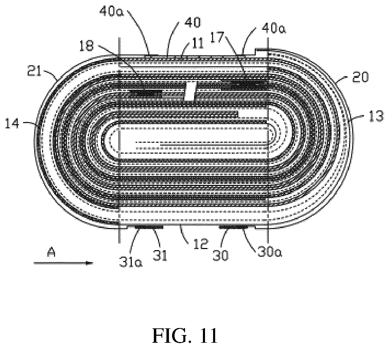

Referring to FIG. 11, specifically, in some embodiments, an outermost layer of the second surface 12 is rolled separately with one layer of aluminum foil and two layers of separators, and the one layer of aluminum foil and two layers of separators that are separately rolled extend to the corresponding first side surface 13 or second side surface 14 in a rolled direction. Compared with an existing method in which the first surface and the second surface are both separately rolled with a plurality of layers of aluminum foil and a plurality of layers of separators, a thickness of the electrode assembly 10 is reduced, and energy density of the battery cell 100 is effectively improved.

An embodiment of this application further provides a battery, including a housing and a battery cell 100 disposed in the housing, and the battery cell may be any one of the foregoing battery cells. In some embodiments, the battery further includes a circuit protection board, where the circuit protection board is configured to monitor a voltage, a current, a state of insulation, and a state of charge of the battery cell 100, to provide safe management during charging and discharging of the battery, alarm and emergency protection for possible faults, and safety and optimization control for operation of the battery.

An embodiment of this application further provides an electric device, including any one of the foregoing batteries.

In addition, those of ordinary skill in the art should be aware of that the foregoing embodiments are only intended to describe this application, but not to limit this application. Appropriate modifications and variations made to the foregoing embodiments without departing from the essential spirit and scope of this application all fall within the scope of this application.

## Claims

1. A battery cell, comprising:
an electrode assembly, wherein an outer surface of the electrode assembly comprises a first surface, a first side surface, a second surface, and a second side surface that are sequentially connected, the first surface is disposed opposite to the second surface, the first side surface is disposed opposite to the second side surface, the outer surface of the electrode assembly further comprises a first end surface and a second end surface opposite the first end surface, and the first end surface and the second end surface are respectively connected to the first surface and the second surface;
**characterized in that** the battery cell further comprises:
a first adhesive film adhered to the first side surface and extending from the first side surface to the first surface and/or the second surface; and
a first adhesive layer adhered to the first surface and extending from the first surface to the second surface through the first end surface, wherein in a width direction of the electrode assembly, there is a first overlapping portion between the first adhesive film and the first adhesive layer on the first surface and/or the second surface; and in the first overlapping portion, the first adhesive film is disposed between the first surface and/or the second surface and the first adhesive layer.

2. The battery cell according to claim 1, **characterized in that** in the width direction of the electrode assembly, a width of the first overlapping portion is greater than or equal to 1 mm and less than or equal to 15 mm.

3. The battery cell according to claim 1, **characterized in that** an adhesive force between the first adhesive film and the first surface and/or the second surface is greater than or equal to 0.05 N/mm, and an adhesive force between the first adhesive film and the first adhesive layer is greater than or equal to 0.15 N/mm.

4. The battery cell according to claim 1, **characterized in that** a product of an area of the first overlapping portion and an adhesive force between the first adhesive film and the first adhesive layer is defined as a first adhesive force, a product of an area of an overlapping portion between the first adhesive film and an outer surface of the electrode assembly and an adhesive force therebetween is defined as a second adhesive force, and the first adhesive force is smaller than the second adhesive force.

5. The battery cell according to claim 1, **characterized in that** the battery cell further comprises:
a second adhesive film, wherein the second adhesive film is adhered to the second side surface and extending from the second side surface to the first surface and/or the second surface; and
a second adhesive layer, wherein the second adhesive layer is adhered to the first surface and extending from the first surface to the second surface through the first end surface; in the width direction of the electrode assembly, there is a second overlapping portion between the second adhesive film and the second adhesive layer on the first surface and/or the second surface; and in the second overlapping portion, the second adhesive film is disposed between the first surface and/or the second surface and the second adhesive layer.

6. The battery cell according to claim 5, **characterized in that** the battery cell further comprises a third adhesive layer adhered to the first surface or the second surface; in the width direction of the electrode assembly, there is a third overlapping portion between the first adhesive film and/or the second adhesive film and the third adhesive layer; and in the third overlapping portion, the third adhesive layer is disposed between the first adhesive film and/or the second adhesive film and the first surface, or the third adhesive layer is disposed between the first adhesive film and/or the second adhesive film and the second surface.

7. The battery cell according to claim 6, **characterized in that** in the width direction of the electrode assembly, a width of the third overlapping portion is greater than or equal to 1 mm and less than or equal to 15 mm.

8. The battery cell according to claim 6, **characterized in that** an adhesive force between the first adhesive film and/or the second adhesive film and the third adhesive layer is greater than or equal to 0.15 N/mm, and an adhesive force between the third adhesive layer and the first surface or the second surface is greater than or equal to 0.15 N/mm.

9. The battery cell according to claim 6, **characterized in that** a product of an area of an overlapping portion between the first adhesive film and an outer surface of the electrode assembly and an adhesive force therebetween is defined as a second adhesive force, a product of an area of the third overlapping portion and an adhesive force between the first adhesive film and the third adhesive layer is defined as a third adhesive force, and the third adhesive force is smaller than the second adhesive force.

10. The battery cell according to claim 5, **characterized in that** the battery cell further comprises a first tab and a second tab that are electrically connected to the electrode assembly respectively, wherein the first tab and the second tab are spaced apart and protrude from the second end surface, the first adhesive film extends to the second surface and is close to the first tab, and the second adhesive film extends to the second surface and is close to the second tab; and in the width direction of the electrode assembly, on the second surface, the first adhesive film partially overlaps the first tab, and/or on the second surface, the second adhesive film partially overlaps the second tab, with an overlapping width greater than or equal to 1 mm and less than or equal to 20 mm.

11. The battery cell according to claim 10, **characterized in that** the first adhesive film and/or the second adhesive film extends on the second surface to a position between the first tab and the second tab.

12. The battery cell according to claim 10, **characterized in that** in the width direction of the electrode assembly, on the first surface, the first adhesive film and/or the second adhesive film does not overlap the first tab.

13. The battery cell according to claim 10, **characterized in that** the battery cell comprises a packaging film, wherein the packaging film comprises a first recess and a second recess that are configured for accommodating the electrode assembly, the first recess has a depth greater than the second recess, the first surface faces a bottom surface of the first recess, and the second surface faces a bottom surface of the second recess.

14. A battery, comprising a housing, **characterized in that** the battery further comprises the battery cell according to any one of claims 1 to 13, wherein the battery cell is disposed in the housing.

15. An electric device, **characterized by** comprising the battery according to claim 14.
